# EUROPEAN PATENT SPECIFICATION

(11) **EP 4 121 882 B1**
(45) Date of publication and mention of the grant of the patent: **12.11.2025**
(21) Application number: 20746355.5
(22) Date of filing: 29.05.2020
(51) Int. Cl.: G06F 21/64, H04L 9/32, H04L 9/40

(54) **RESTRICTING DATA ACCESS**
EINSCHRÄNKUNG DES DATENZUGRIFFS
RESTRICTION D'ACCÈS À DES DONNÉES

(43) Date of publication of application: 25.01.2023
(73) Proprietor: Google LLC, Mountain View, CA 94043 (US)
(72) Inventor: WANG, Gang, Mountain View, California 94043 (US); JACOBSON, Alex Daniel, Mountain View, California 94043 (US)
(74) Representative: Marks & Clerk GST
(86) International application number: PCT/US2020/035096
(87) International publication number: WO 2021/242250

(56) References cited:
- US-A1- 2019 052 621
- US-A1- 2020 112 442
- US-A1- 2020 169 421

## Description

### BACKGROUND

Some devices can include multiple applications that execute on the device. The various applications can have different levels of trust. For instance, an operating system on the device can have a higher trust level, and access to more types of data, than a third party application. Some examples of third party applications include social networking applications, web browsers, and banking applications.

US 2020/169421 A1 describes techniques for verifying the correct application purpose for applications that serve multiple purposes and to determine the correct purpose for each requested data access.

US 2019/052621 A1 describes a security control system including one or more security control computing devices for automating security controls between computer networks.

US 2020/112442 A1 describes a system for recording a digitally signed assertion using an authorization token, includes a cryptographic evaluator designed and configured to receive a dataset and an authorization token.

### SUMMARY

To improve data security, a device can use a twice-signed data usage token for an application to validate or authenticate the application's access to data, e.g., personal data or other sensitive data. The twice-signed data usage token can identify a declared use of data collected by the application, information about a privacy policy, e.g., for the application's publisher, and other pertinent information. The twice-signed data usage token can be an implementation level data structure, e.g., a data structure used at the application layer in the Open Systems Interconnection model ("OSI model").

The twice-signed data usage token can be signed by systems for both a system that has data for the application, e.g., the application's publisher or an entity that will receive data generated by the application, and a data-access authorization system. Although the below examples generally discuss a signature for the application's publisher, the data usage token can be signed by another entity, e.g., that receives data generated by the application. The data-access authorization system can be for a vendor of an operating system for the device. Including signatures for both the publisher and the vendor in the twice-signed data usage token can support public verification of the token, e.g., verify that the token has not changed, that the token is for the application, or both.

The device, e.g., the device's operating system, can receive a system application programming interface ("API") call from the application for access to data collected by the device. The data collected by the device can be data stored in a memory of the device or data collected by sensors in the device that is not stored in permanent memory, e.g., heartbeat data. The API call can include a reference to the twice-signed data usage token for the application. When the API call does not include a reference to the twice-signed data usage token, the application, a system of the application's publisher, or both, can make the twice-signed data usage token available to the device, e.g., the system APIs. For instance, the publisher's system can send the twice-signed data usage token to the device when the application is installed on the device. The device can store the twice-signed data usage token in a twice-signed token database for later use when determining whether to allow the application access to data. In some examples, the device can request the twice-signed data usage token from the publisher system after receiving the API call from the application.

After receiving the API call from the application for access to data, the device, e.g., system APIs, verify the twice-signed data usage token. The device matches the application's identity to the twice-signed data usage token. When the identity matches, the device can determine to what types of data the application has access based on the twice-signed data usage token. When the application has access to the type of data requested, the device can allow or enable the application's access to the requested data, e.g., provide the requested data to the application. When the application's identity does not match, or when the application does not have access to the type of data requested, the device can prevent the application from accessing the requested data, e.g., determine to skip providing the requested data to the application.

If an off-device system wants access to data collected by the device, the device can generate a token that includes the requested data along with an identifier, e.g., an pseudonymous identifier, for the device. The device can encrypt the token and provide the token to the application, which can then send the token to the off-device system. The device can encrypt the token using a public key for the off-device system, e.g., so that only the off-device system can decrypt the token and the application is unable to access the unencrypted data. The public key can be encoded in the twice-signed data usage token.

The off-device system can store the data in a manner to enable later access to data stored on the off-device system. For instance, the off-device system can store the token in a database with the pseudonymous identifier. When the off-device system receives a request that relates to the data, e.g., from the device, the off-device system uses the pseudonymous identifier to locate the token in the database and perform a corresponding action. The request can be to delete the data, correct at least some of the data, cause presentation of at least some of the data, or another appropriate action. The request the device generates for the off-device system that requests that the off-device system perform an action related to the data can include the pseudonymous identifier as an indicator of for what data the off-device system should perform the action.

In some implementations, an application can be associated with more than one twice-signed data usage token. For example, the device can have different twice-signed data usage tokens for different data usages. A first use can be an advertising use. A second use can be non-advertising use. Each of the tokens, e.g., for off-device data use, can include different public/private key pairs to maintain separate access for each of the uses.

In these implementations, the device can block access to certain types of data when receiving a first use request with a first twice-signed data usage token and enable access to the certain types of data for a second use request with a second twice-signed data usage token. For instance, a first twice-signed data usage token can identify advertising as the declared use and a second twice-signed data usage token can identify health monitoring as the declared use. When the device receives a request, from the application, for access to heartbeat data that is associated with the advertising declared use token, the device can prevent access to the heartbeat data. When the device receives another request, from the application, for access to heartbeat data that is associated with the health monitoring declared use token, the device can enable the application's access to the heartbeat data. This can improve data security, data privacy, or both.

In general, one aspect of the subject matter described in this specification can be embodied in methods that include the actions of receiving, by a device and for an application, a request for access to data collected by the device; determining, by the device and based on a twice-signed data usage token for the application, an identifier for the application and a declared use of the data by the application based on contents of the twice-signed data usage token that has been digitally signed by both of (i) a system that has data for the application and (ii) a data-access authorization system; and controlling, by the device, the application's access to the data using the identifier for the application, the declared use for the data, and an authorized use of the data, including: enabling, by the device and for the application, access to the data when (i) both signatures of the twice-signed data usage token have been validated and (ii) the declared use of the data matches an authorized use of the data; and preventing the application from accessing the data when (i) either signature of the twice-signed data usage token has not been validated or (ii) the declared use of the data fails to match the authorized use of the data. Other embodiments of this aspect include corresponding computer systems, apparatus, computer program products, and computer programs recorded on one or more computer storage devices, each configured to perform the actions of the methods. A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

The foregoing and other embodiments can each optionally include one or more of the following features, alone or in combination. Controlling, by the device, application access to the data can include controlling, by an operating system of the device, application access to the data. Receiving the request can include receiving a request that identifies the twice-signed data usage token.

In some implementations, the method can include in response to receiving the request, determining an identifier for the application; and retrieving, by the device and from a token database, the twice-signed data usage token using the identifier for the application. Controlling application access to the data can include controlling, by the device, application access to the data using the identifier for the application, the declared use for the data, the one or more requested data types, and a data type of the data requested, including: enabling, by the device and for the application, access to the data when (i) both signatures of the twice-signed data usage token have been validated, (ii) the declared use of the data matches an authorized use of the data, and (iii) neither signature has expired; and preventing the application from accessing the data when (i) either signature of the twice-signed data usage token has not been validated or (ii) the declared use of the data fails to match the authorized use of the data or (iii) either signature has expired.

In some implementations, the method can include determining one or more requested data types identified by the twice-signed data usage token. Controlling application access to the data can include controlling, by the device, application access to the data using the identifier for the application, the declared use for the data, the one or more requested data types, and a data type of the data requested, including: enabling, by the device and for the application, access to the data when (i) both signatures of the twice-signed data usage token have been validated, (ii) the declared use of the data matches an authorized use of the data, and (iii) the one or more requested data types include the data type of the data requested; and preventing the application from accessing the data when (i) either signature of the twice-signed data usage token has not been validated or (ii) the declared use of the data fails to match the authorized use of the data or (iii) the one or more requested data types do not include the data type of the data requested.

In some implementations, the declared use of the data by the application can be from a predetermined set of declared data uses. The one or more requested data types can be from a predetermined set of data types. The twice-signed data usage token can include one or more of a link to a privacy policy for a publisher of the application, an identifier for the publisher, a public key for the publisher, or time data that represents when the twice-signed data usage token expires. The time data can include (a) a signature date that indicates when the publisher signed the twice-signed data usage token after which the twice-signed data usage token will expire upon the end of a predetermined period of time or (b) an expiration date that indicates when the twice-signed data usage token expires. The public key for the publisher can indicate the declared use of the data by the application, the system that has data for the application, or both.

In some implementations, a first signature for the system that has data for the application can verify the contents of a first part of the twice-signed data usage token. A second signature for the data-access authorization system can verify the contents of the entire twice-signed data usage token. The first signature for the system that has data for the application can verify the identifier for the application and the declared use of the data by the application.

In some implementations, the method can include receiving, by the device and for a second application that is a different application from the application, a second request for access to second data collected by the device; determining, by the device, that the device includes data access settings for the second application; in response to determining that the device includes data access settings for the second application, determining, by the device, to skip analysis of any twice-signed data usage token for the second application; and controlling, by the device, the second application's access to the second data using the data access settings. The method can include receiving, by the device and for a second application that is a different application from the application, a second request for access to second data collected by the device; determining, by the device, that the device does not have a twice-signed data usage token for the second application; in response to determining that the device does not have a twice-signed data usage token for the second application, determining, by the device, default data access settings for the second application; and controlling, by the device, the second application's access to the second data using the default data access settings.

In some implementations, the method can include receiving, by the device and for a second application that is a different application from the application, a first request (a) for access to second data collected by the device (b) that identifies a first twice-signed data usage token for the second application with a first declared use of the second data by the second application; determining, by the device, an authorized use of the second data; determining, by the device, that the first declared use of the second data by the second application fails to match the authorized use of the second data; in response to determining that the first declared use of the second data by the second application fails to match the authorized use of the second data, preventing the second application from accessing the second data; receiving, by the device and for the second application, a second request (a) for access to the second data collected by the device (b) that identifies a second twice-signed data usage token for the second application with a second declared use of the second data by the second application; determining, by the device, that the second declared use of the second data by the second application matches the authorized use of the second data; in response to determining that the second declared use of the second data by the second application matches the authorized use of the second data, enabling, by the device and for the second application, access to the second data.

In some implementations, the first declared use of the second data can include using the second data for a specific purpose. The second declared use of the second data can include using the second data for purposes other than the specific purpose.

In some implementations, the method can include, upon enabling, by the device and for the application, access to the data, creating an entry in an access database that identifies the application and the data collected by the device that was accessed by the application; receiving, by the device, user input that indicates a request presentation of a user interface that identifies data collected by the device that was accessed by the application; and providing, by the device and using the access database, instructions to cause presentation of the user interface that identifies the data collected by the device that was accessed by the application. The method can include receiving, by the device and while the user interface is presented, second user input that indicates a request for custom data access settings for the application; and updating, by the device, data access settings for the application using the request for custom data access settings for the application. The method can include receiving, by the device and for the application, a second request for access to data collected by the device; determining, by the device, that the device includes data access settings for the application; in response to determining that the device includes data access settings for the application, determining, by the device, to skip analysis of the twice-signed data usage token for the application; and controlling, by the device, the application's access to the data using the data access settings.

In some implementations, the method can include in response to controlling the application's access to the data, storing, by the device and in memory, a control record that indicates whether the device enabled or prevented the application's access to the data and a timestamp; receiving, by the device and for the application, a second request for access to data collected by the device; determining, by the device and using the control record, that the device controlled the application's access to the data within a threshold period of time; and in response to determining that the device controlled the application's access to the data within a threshold period of time, controlling, by the device, the application's access to the data in accordance with the control record.

In some implementations, the method can include determining, by the device, that the application is requesting data for use by an off device application. Enabling, for the application, access to the data can include creating a token that includes the requested data; encrypting the token; and providing the encrypted token to the application. Encrypting the token can include encrypting the token using a public key for the off device application. Encrypting the token using the public key for the off device application can include encrypting the token using the public key for the off device application that was included in the twice-signed data usage token.

In some implementations, the method can include receiving, by the data-access authorization system and from a computer associated with the system that has data for the application, a request to validate a singly-signed data usage token, the request including the singly-signed data usage token that includes the identifier for the application, the declared use of the data received from a device and by the application, and a first digital signature for the system that has data for the application; validating, by the data-access authorization system, the singly-signed data usage token including: determining to allow the application to use data of the data type received from a device for the declared use; and determining that the singly-signed data usage token is authentic using the first digital signature for the system that has data for the application; generating, by the data-access authorization system, the twice-signed data usage token using a second digital signature for the data-access authorization system and data from the singly-signed data usage token including the first signature for the system that has data for the application. Generating the twice-signed data usage token can include generating, by the data-access authorization system, the twice-signed data usage token by appending the second digital signature for the data-access authorization system to the singly-signed data usage token. Generating the twice-signed data usage token can include generating, by the data-access authorization system, the twice-signed data usage token by appending the second digital signature for the data-access authorization system and an expiration date for the second digital signature to the singly-signed data usage token. The method can include generating, by the device, a request to delete the data for which an expiration date of the data has expired; and sending, to a publisher system of the off device application, the request to delete the data. The method can include deleting data from the off device application in response to: receiving a request, generated by the device, to delete data entries that include a specific token identifier; or determining that the expiration date for the second digital signature has expired.

The subject matter described in this specification can be implemented in various embodiments and may result in one or more of the following advantages. In some implementations, the systems and methods described in this document, e.g., that use a twice-signed data usage token, can provide improved data security, improved user privacy, reduce a likelihood of sensitive data being used for specified purposes (e.g., advertising), reduce unauthorized data access, or a combination of two or more of these. For instance, comparing a declared use with an authorized use for data can improve data security, preventing an application from accessing data to which it does not have access, improve user privacy, reduce a likelihood of sensitive data being used for specified purposes (e.g., advertising), reduce unauthorized data access, or a combination of two or more of these. In some implementations, using a twice-signed data usage token that includes signatures from both a system that has data for the application and a data-access authorization system, e.g., a system managed by a device's operating system vendor, can improve data security, preventing an application from accessing data to which it does not have access, improve user privacy, reduce a likelihood of sensitive data being used for specified purposes (e.g., advertising), reduce unauthorized data access, or a combination of two or more of these.

In some implementations, use of a twice-signed data usage token can improve data use transparency, e.g., enable a person to review an audit log regarding data use, improve user consent, e.g., enable a person to revoke data access for a particular application or particular data type or both, or improve user control, e.g., using data access requests. In some implementations, use of a twice-signed data usage token can improve data retention policy enforcement. For instance, a data access authorization system can use a twice-signed data usage token that includes data retention information to enforce a data retention policy defined by the data retention information to cause another system, e.g., the application or another system that has data for the application, to delete data collected by a computing device.

The details of one or more implementations of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 depicts an example environment in which a computing device controls an application's access to data.
FIG. 2 is a swim lane diagram of a process for restricting access to data.
FIG. 3 is a flow diagram of a process for controlling an application's access to data.

Like reference numbers and designations in the various drawings indicate like elements.

### DETAILED DESCRIPTION

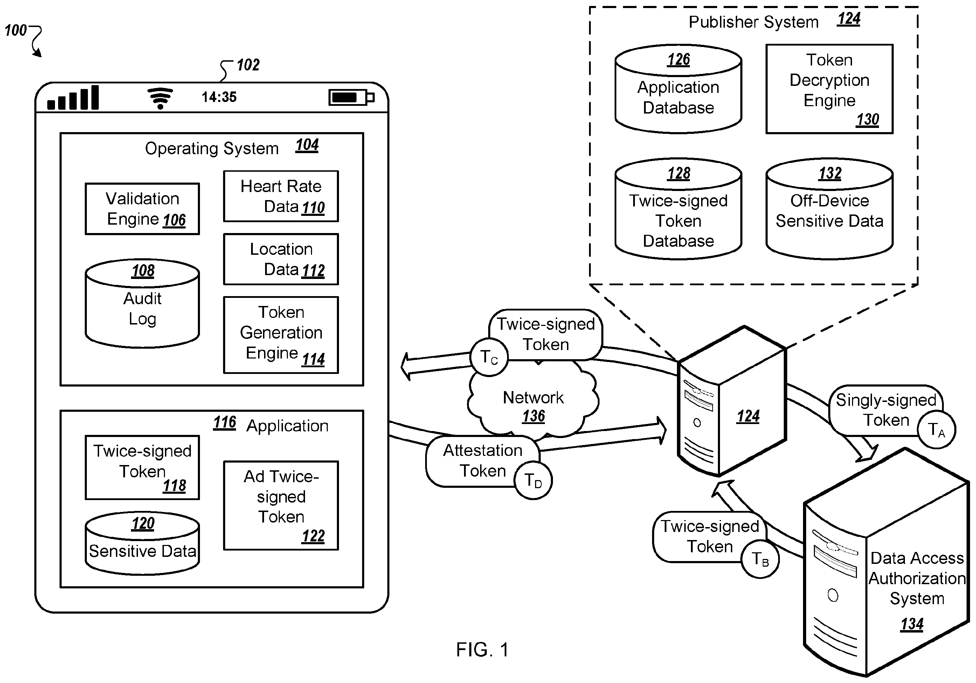

FIG. 1 depicts an example environment 100 in which a computing device 102 controls an application's 116 access to data. The computing device 102, e.g., an operating system 104 executing on the computing device 102, can use a twice-signed data usage token 118 for the application 116 when controlling the application's 116 access to data. The application 116 executes on the computing device 102.

When a publisher develops an application 116, a publisher system 124 can generate a twice-signed data usage token that computing devices executing the application 116 can use to control the application's 116 data access. The twice-signed data usage token can include various information that a computing device 102 can use to determine whether to enable or prevent the application's 116 data access, e.g., to control the application's 116 data access. In some implementations, the twice-signed data usage token can include various information that a computing device 102 can use to determine whether to enable or prevent the publisher system's 124 data access via the application 116, e.g., to control the publisher system's 124 data access. The publisher system 124 can provide the twice-signed data usage token to the computing device 102 as part of the installation of the application 116 or separately. The computing device 102 can then use the twice-signed data usage token to control the application's 116 access to data collected by the computing device 102.

The publisher system 124 or an application developer system can generate a data structure, e.g., a singly-signed data usage token, that includes multiple data fields for controlling the application's 116 access to data collected by a computing device. Examples in this document refer to the publisher system 124, but another system can perform the operations described with reference to the publisher system 124, e.g., an application developer system when different from the publisher system 124.

The data fields can include a field for the categories of data types that the application 116 might request. Some categories can include fine granularity location data, e.g., location data 112, and biometric data, such as heart rate data 110 for a user of a computing device. The data fields can include a field for the declared usage of received data. The declared usage can be one of a predetermined list of declared uses, e.g., selected by the publisher system 124, e.g., based on developer input. The predetermined list of declared uses can be generated by a data-access authorization system 134.

The data fields can include a field for privacy information. The privacy information can be a link, e.g., a uniform resource identifier ("URI"), to a privacy policy, data about the publisher's privacy policy, or both. The data fields can include fields for the publisher's identity, the application's identity, or both. For instance, the singly-signed data usage token can include a publisher identifier for a computing device, a data-access authorization system, or both, to use when verifying the token using the publisher's signature. The computing device 102 can use the application's identity to verify that the requesting application is associated with the twice-signed data usage token included in a data access request. In implementations when the application requests data for an off-device system, the fields can include a field for an off-device system identifier, e.g., instead of or in addition to the application identifier. The computing device 102 can use the application's identity to retrieve a twice-signed data usage token from a database, e.g., when the request received by the computing device 102 does not include a twice-signed data usage token.

The identifier for the publisher, the identifier for the off-device system, or both, can identify a system at which data from the computing device 102 is stored. For instance, the identifier can be a URI for a system on which the data is stored.

The data fields can include a field for a human friendly string. The human friendly string can include Unicode characters. The human friendly string can include human readable characters that identify a name for the publisher, a name for the application, or both. The human readable characters can include Unicode characters.

The data fields can include a field for an expiration date of the twice-signed data usage token. The expiration date can indicate a time after which the twice-signed data usage token cannot be used to validate the application's 116 data access requests. For example, when the computing device 102 receives a twice-signed data usage token with an expiration date of May 12, 2023, the computing device 102 can continue to use the twice-signed data usage token until May 12, 2023. When the computing device 102 receives a data access request from the application 116 after May 12, 2020, the computing device can determine to prevent the application 116 from accessing the requested data, e.g., determine to skip providing the requested data to the application 116.

In some implementations, the data fields can include a signature date instead of or in addition to the expiration date. The signature date can indicate when a publisher system signed content for the twice-signed data usage token, e.g., the singly-signed data usage token the contents of which are included in the twice-signed data usage token. Systems can use the signature date to determine an expiration for the twice-signed data usage token. For instance, a system, such as the data-access authorization system 134 or the computing device 102, can determine that the twice-signed data usage token or the singly-signed data usage token expires upon the end of a predetermined period of time after the signature date, e.g., one or two years.

The data fields can include a field for the publisher's public key. In some implementations, the data fields don't include a field for the publisher's public key. Instead, device 102 or operating system 104 can fetch the publisher's public key from the publisher's website directly.

The data fields can also include a field for the publisher's signature. A device or system can use the publisher's public key to verify that the publisher's signature is valid, e.g., that the data in the singly-signed data usage token has not been falsified. The publisher's signature can be a signature that can validate the contents of the singly-signed data usage token, e.g., a digital signature. For example, the publisher system 124 can generate the publisher's signature using a private key for the publisher system 124 to encode the data in the singly-signed data usage token. Another system, e.g., the data-access authorization system 134 or the computing device 102, can use a public key for the publisher system 124 and the publisher's signature to verify that the contents of the singly-signed data usage token, or the corresponding contents of the twice-signed data usage token. For instance, the other system can encrypt the contents of the singly signed data usage token, compare the encrypted contents with the publisher's signature. If the two are the same, the data-access authorization system 134 can determine that the publisher's signature is verified. If the two are different, the data-access authorization system 134 can determine that the publisher's signature is not verified.

The publisher system 124 provides, at time T_{A}, the singly-signed data usage token to a data-access authorization system 134. The data-access authorization system 134 uses the signature, the public key, or both, to validate the contents of the singly-signed data usage token. For instance, the data-access authorization system 134 can use the publisher's signature to make sure that the contents of the singly-signed data usage token have not been modified since the publisher system 124 generated the singly-signed data usage token. If the contents have not been modified, the data-access authorization system 134 can proceed with the rest of the validation process for the singly-signed data usage token. If the contents have been modified, the data-access authorization system 134 can determine that the singly-signed data usage token is invalid.

The data-access authorization system 134 can verify that the public key is actually the public key for the publisher system 124. The data-access authorization system 134 can use any appropriate process. For instance, the data-access authorization system 134 can access a database of public keys for multiple publisher systems and determine that the public key from the singly-signed data usage token matches the public key in the database. In some implementations, the publisher's public key can be replaced with a digital certificate issued by a trusted Certificate Authority ("CA"). The digital certificate includes data for the publisher's identity, the publisher's public key as well as the identity of the Certificate Authority and the CA's signature over the rest of the digital certificate. The data-access authorization system 134 can use the public key from the singly-signed data usage token to encrypt the contents of the singly-signed data usage token. If the encrypted contents are the same as the publisher's signature, the data-access authorization system 134 can determine that the singly-signed data usage token is validated. If the encrypted contents are different from the publisher's signature, or if the public key from the singly-signed data usage token is different from a public key in a database of public keys, the data-access authorization system 134 can determine that the digital signature in the singly-signed data usage token is invalid. Otherwise the digital signature in the singly-signed data usage token is valid.

If both the public key and the digital signature are validated, the data-access authorization system 134 can proceed with the rest of the validation process for the singly-signed data usage token. If not, the data-access authorization system 134 can determine that the singly-signed data usage token is invalid and stop the process for creation of a twice-signed data usage token.

The data-access authorization system 134 can verify that the publisher's expiration date has not expired. The data-access authorization system 134 can verify the expiration date by comparing the expiration date to a current date. If the current date is after the expiration date, the data-access authorization system 134 can determine that the expiration date has expired. If the current date is before or the same as the expiration date, the data-access authorization system 134 can determine that the expiration date has not expired. If the date has not expired, the data-access authorization system 134 can proceed with the rest of the validation process for the singly-signed data usage token. If the date has expired, the data-access authorization system 134 can determine that the singly-signed data usage token is invalid and stop the process for creation of a twice-signed data usage token.

In some implementations, the data-access authorization system 134 can validate the singly-signed data usage token by verifying that the application 116 should be allowed access to data based on the declared use, the categories of data types requested, or both. For instance, the data-access authorization system 134 can determine whether the application 116 should have access to the categories of data requested, e.g., location data and biometric data, based on the declared use, e.g., advertising or health monitoring. For instance, the data-access authorization system 134 can determine that the application 116 should not have access to biometric data for an advertising declared use but can have access to biometric data for a health monitoring declared use.

The data-access authorization system 134 can include a database that identifies data types for which applications are allowed access for a corresponding declared use. The data-access authorization system 134 can validate the declared use and the categories of data types requested by determining whether the database associates each of the categories of data types with the declared use. If the database does not associate each of the categories of data types with the declared use, the data-access authorization system 134 can determine that the singly-signed data usage token is invalid, or create a twice-signed data usage token that is limited to the data types associated with the declared use in the database and that were from the singly-signed data usage token. If the database associates each of the categories of data types with the declared use, the data-access authorization system 134 can determine that the singly-signed data usage token is valid based on the declared use and categories of data types requested.

In some implementations, the validation process can include testing of the corresponding application. For instance, the data-access authorization system 134 can test the application 116 to determine the data requested by the application 116. When the types of data requested by the application 116 correspond to the categories of data types requested, the data-access authorization system 134 can determine that the token is valid, e.g., assuming that all other parts of the validation process also pass. When at least one of the types of data requested by the application 116 are different than the categories of data types requested, the data-access authorization system 134 can determine that the token is invalid.

The data-access authorization system 134 generates a twice-signed data usage token 118 for the application 116. During creation, the data-access authorization system 134 can generate a data structure that includes the contents of the singly-signed data usage token with one or more additional fields. The additional fields can include an authorization-system expiration date. The authorization-system expiration date can indicate a time after which the twice-signed data usage token cannot be used to validate the application's 116 access to data. The authorization system expiration date can be the same date or a different date than the expiration date from the singly-signed data usage token.

The twice-signed data usage token can include one or more expiration dates to ensure that the publisher system 124 renews the twice-signed data usage token for the application 116 to continue to have access to computing device collected data. This can increase security, privacy, or both, for the data. In some implementations, usage of an expiration date can ensure that changes to the publisher's privacy policy are reflected in the twice-signed data usage token. The expiration date in the singly-signed data structure can imply the publisher's commitment to the privacy policy to at least the expiration date.

The twice-signed data usage token includes a field for the data-access authorization system's 134 signature. After validating the singly-signed data usage token, the data-access authorization system 134 can generate a second signature. The second signature can be a digital signature that validates the contents of the twice-signed data usage token. For instance, the second signature can be used to validate the contents, e.g., fields, from the singly-signed data signature, including the publisher's signature, and the authorization-system expiration date. The publisher's signature and the second signature can be a byte array, e.g. of 64-bytes in size when using an elliptic curve digital signature algorithm. The elliptic curve digital signature algorithm can use a National Institute of Standards and Technology ("NIST") P-256 curve. The publisher's public key and the data-access authorization system's 134 public key can be in a compressed format, e.g., a 33-byte compressed format for an NIST P-256 curve or a 64-byte uncompressed format for an NIST P-256 curve. The system can use compressed signatures to reduce bandwidth requirements, e.g., when generating the twice-signed data usage token, when providing the twice-signed data usage token for a data access request, or both. In some implementations, the systems can use an Edwards-curve Digital signature algorithm, e.g., an ED25519 curve, with a public key size of 32 bytes and a 64 byte digital signature.

The publisher's signature, the second signature, the publisher's public key, or a combination of these can be encrypted, e.g., using 256 bit encryption. For instance, the data-access authorization system 134 can generate its signature using an Elliptic Curve Digital Signature Algorithm ("ECDSA"). The publisher system 124 can generate its signature using ECDSA.

At time T_{B}, the publisher system 124 receives the twice-signed data usage token from the data-access authorization system 134. The publisher system 124 stores the twice-signed data usage token 118 in a twice-signed token database 128. For example, the publisher system 124 includes an application database 126 that has data for each of multiple applications, including the application 116. The data can include executables or other files that enable installation of the application on devices, such as the computing device 102. The data can include references to the multiple applications, e.g., identifiers, references to locations at which files for the applications are stored, or both.

As part of the same database or a separate database, the publisher system 124 maintains the twice-signed token database 128 that includes tokens for some or all of the applications identified by the application database 126. For instance, the publisher system 124 can include a twice-signed data usage token in the twice-signed token database 128 for each of the applications referenced in the application database 126 that have been published.

In some examples, the tokens can be version specific. For instance, the publisher system 124 can maintain a twice-signed data usage token in the twice-signed token database 128 for each application version, e.g., any version or any major version. In some implementations, the allowed application versions can be encoded in the twice-signed data usage token.

Based on installation of the application 116 on the computing device 102, the computing device 102 receives, at time Tc, the twice-signed data usage token 118 from the publisher system 124 or from the application 116 itself. For example, the computing device 102 can receive data that indicates user input. The user input can be a command to install the application 116. The computing device 102 can request installation data from the publisher system 124 in response to the user input. The publisher system 124, which can be specific to a single application publisher or include data for applications by multiple, different publishers, can provide the installation data to the computing device 102. The installation data can include the twice-signed data usage token 118. In some examples, the publisher system 124 can send the twice-signed data usage token to the computing device 102 separate from the installation data. In some examples, the twice-signed data usage token can be carried by the application 116, e.g., part of the application's resources.

In some implementations, the application 116 can be installed on the computing device 102 as part of an initial device setup. For instance, the application 116 can be installed when software is initially placed on the computing device 102, e.g., along with the operating system 104, when the computing device 102 is first configured by a user, or at another appropriate time.

Based on the installation of the application 116, or as part of the application's 116 installation, the computing device 102 can receive the twice-signed data usage token 118. The computing device 102 stores the twice-signed data usage token 118 in memory. For instance, the application 116, while executing on the computing device 102, can store the twice-signed data usage token 118 in memory as part of the application's 116 data. The computing device 102 can store the twice-signed data usage token 118 in a database of tokens, e.g., maintained by the operating system 104. The database of tokens might not be accessible by the application 116, e.g., and only the operating system 104 has access to the token database.

When the computing device 102, e.g., the operating system 104, receives a request from the application 116 for access to data, the computing device 102 determines the twice-signed data usage token 118 for the application 116. The request can include the twice-signed data usage token 118. The computing device 102 can retrieve the twice-signed data usage token 118 from the request.

When the request does not include the twice-signed data usage token 118, the computing device 102 can use an identifier for the application 116, included in the request or based on receipt of the request from the application 116, to determine the twice-signed data usage token 118 for the application 116. For example, the computing device 102 can use the identifier as a key to a token database that includes twice-signed data usage tokens for applications installed on the computing device 102. The computing device 102 can retrieve a record from the database that is identified by the key. The record can include the twice-signed data usage token 118.

In some examples, the computing device 102 can use the application's 116 identifier to request the twice-signed data usage token 118 from another system. For instance, after receiving a data access request, the computing device 102 can request the twice-signed data usage token 118 from the publisher system 124, the data-access authorization system 134, or another system. The computing device 102 can request the twice-signed data usage token 118 from another system the first time the computing device 102 executes the application 116, the first time the computing device 102 receives a request from the application 116 for data collected by the computing device 102, or at another appropriate time. The computing device 102 can store the twice-signed data usage token 118 received from another system in a database, e.g., a database of twice-signed data usage tokens for the applications on the computing device 102.

A validation engine 106 on the computing device 102 validates the application's 116 data access request using the twice-signed data usage token 118. For instance, the validation engine 106 uses the categories of data types requested, the declared data use, or other data from the twice-signed data usage token to validate the application's 116 data access request.

As part of the validation process, the validation engine 106 can validate one or both of the signatures included in the twice-signed data usage token. For instance, the validation engine 106 can use the publisher's signature to validate the categories of data types requested, the declared data use, the privacy policy data, the identifier for the publisher, the identifier for the application 116, the publisher's public key, a publisher expiration date, or a combination of two or more of these. The validation engine can use the data-access authorization system's 134 signature to validate the publisher's signature, the categories of data types requested, the declared data use, the privacy policy data, the identifier for the publisher, the identifier for the application 116, the publisher's public key, a publisher expiration date, an authorization-system expiration date, or a combination of two or more of these.

The validation engine 106 can validate a signature by using a public key to encrypt the contents to which a signature corresponds. For the publisher's signature, the validation engine 106 can use the publisher's public key. For the data-access authorization system's signature, the validation engine 106 can use a public key for the data-access authorization system. When the encrypted contents match the signature, the validation engine 106 can determine that the contents are validated. The publisher signature can correspond to data that was included in the singly-signed data usage token. The data-access authorization system's signature can correspond to all other data included in the twice-signed data usage token.

When the validation engine 106 determines that the request is invalid, the computing device 102 prevents the application's 116 access to the requested data. For instance, the validation engine 106, the operating system 104, or both, prevent the application's 116 access to the requested data. Preventing access can include providing a response to the application 116 that indicates that the request is denied. Preventing access can include determining to not grant the application 116 privileges necessary to access the requested data.

When the validation engine 106 determines that the request is valid, the computing device 102 enables the application's 116 access to the requested data. For example, the validation engine 106, the operating system 104, or both, can change data access privileges for the requested data to enable the application 116 to access the data. In some examples, the computing device 102 can provide the requested data, e.g., heart rate data 110 or location data 112, to the application 116.

Upon receipt of the requested data, the application 116 can store the requested data in memory, as the sensitive data 120 that was collected by the computing device 102. The application 116 can use the sensitive data, e.g., based on the declared use from the twice-signed data usage token. For instance, a health monitoring application 116 can analyze the data and generate a user interface with information about the received data.

When the computing device 102 provides requested data to the application 116, the computing device 102 adds an entry in an audit log 108 that identifies the application 116, e.g., an identifier for the application. The entry can identify the type of data provided to the application 116, the declared use for the data, the categories of data types requested, the particular data provided to the application 116, or a combination of two or more of these.

The entry in the audit log 108 can include the publisher's signature, the twice-signed data usage token, an identifier for the application, an identifier for the publisher, or a combination of two or more of these. For instance, the computing device 102 can add the twice-signed data usage token to an entry in the audit log 108 to facilitate later retrieval of information about data accessed by the application 116, the publisher system 124, or both. In some examples, the identifier for the application, the identifier for the publisher, or both, can be human friendly strings, e.g., from the twice-signed data usage token. In some examples, the entry can indicate whether the application 116 was allowed or denied access to the requested data, e.g., the computing device 102 can create entries in the audit log 108 for requests that were denied when the application's 116 data access was prevented.

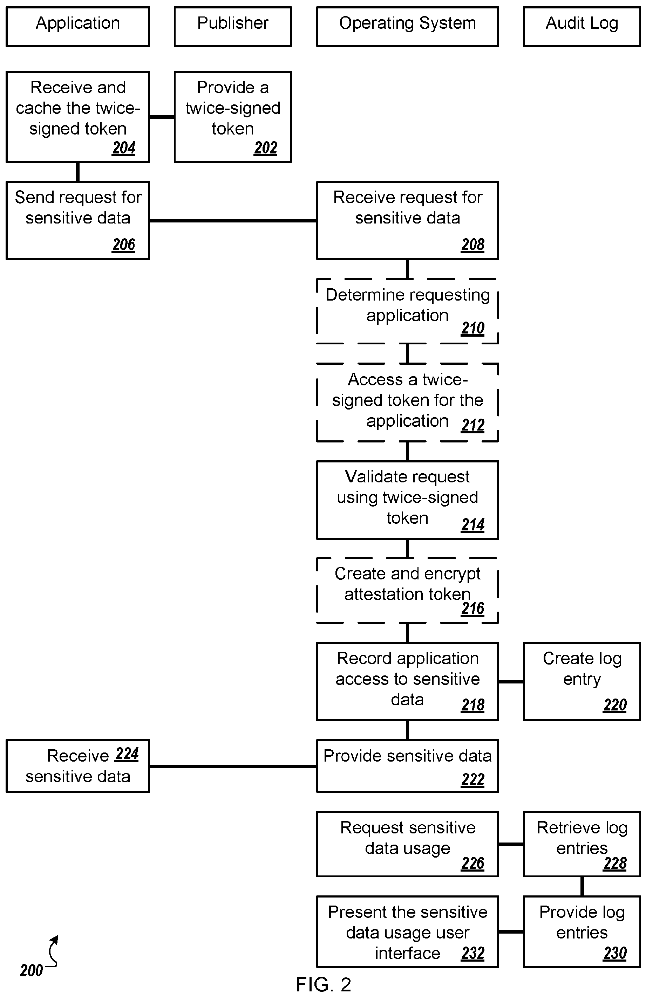

The computing device 102 can use the audit log 108 to generate a user interface that presents information, e.g., to a user of the computing device 102, about data provided to applications executing on the computing device 102, and/or enable the user to take action regarding the use of information by applications. As described in more detail with reference to FIG. 2 below, the user interface can enable changes to application data access, e.g., application data privileges, deletion of the sensitive data 120 stored by the application 116, or other appropriate privacy control functionality.

In some implementations, the application 116 requests access to data that will be stored on a remote system, e.g., the publisher system 124. For instance, the application 116 can be part of a navigation system. The application 116 can request access to the location data 112 that the application will provide to the publisher system 124, as part of the navigation system, to get driving directions to another location.

When requesting data for use on a remote, e.g., off-device, system, the application 116 can use a twice-signed data usage token for the off-device system. For instance, the application 116 can provide the request to the computing device 102 that includes a token with an identifier for the off-device system instead of or in addition to an identifier for the application 116.

When the computing device 102 receives a request for data that will be stored on an off-device system, a token generation engine 114 processes data responsive to the request. The token generation engine 114 can generate a token that includes the responsive data and an identifier, e.g., for the computing device 102 or the token. The token can be any appropriate token. In some situations, the token can be an attestation token, e.g., that is digitally signed by the computing device 102. An attestation token can be digitally signed to attest that the data included in the token has not been tampered with.

The token can include data in addition to the data responsive to the request, e.g., the location data 112. The token can include a type of the responsive data. The token can include an authorized use for the data, a declared use for the data, or both. The token can include an expiration date that indicates a date after which the remote system will delete the data from the remote system. The token can include an identifier for the remote system, e.g., the publisher identifier. The off-device system can use the additional data in the token when processing the data, e.g., to ensure that the off-device system complies with the declared use or the authorized use, or to determine how to process the data using the data type, or a combination of these.

The token generation engine 114 can encrypt data in the token. For instance, the token generation engine 114 can use the publisher's public key, e.g., from the twice-signed data usage token, to encrypt the data in the token. The token generation engine 114 can use any appropriate method to encrypt the data in the token.

The computing device 102 provides the token to the application 116. When the data in the token is encrypted, the application 116 is unable to access the encrypted data because the application 116 does not have the publisher's private key. This can increase data security by preventing the application from accessing data that was authorized for the publisher system 124, e.g., as the off-device system, but was not authorized for the application 116, even though the application 116 requested the data from the computing device 102. This can increase privacy by preventing access to the data by unauthorized applications, e.g., the application 116.

The application 116 provides, at time T_{D}, the token, e.g., as an attestation token, to the publisher system 124. For instance, the application 116 can provide an approximate current physical location (e.g., GPS location) of the computing device 102, e.g., a mobile device, to the publisher system 124 as part of a navigation system.

The publisher system 124 receives the token and processes data in the token. For instance, the publisher system 124 can decrypt the token, extract the location data 112 from the decrypted token, and process the location data 112. The publisher system 124 can use a token decryption engine 130 to decrypt the token. The token decryption engine 130 can use any appropriate method to decrypt the token, e.g., using the publisher's private key. The publisher system 124 can provide, to the application 116, data to cause the application 116 to present driving instructions in a user interface based on processing the data.

The publisher system 124 can store data from the token in a database, e.g., that includes off-device sensitive data 132. For example, the publisher system 124, e.g., the token decryption engine 130, can create an entry in the off-device sensitive data 132. The entry includes an identifier for the data extracted from the token. The identifier can be an identifier for the computing device 102, e.g., for an account associated with the computing device 102.

The identifier can be an identifier for a token, e.g., that cannot be used to associate the token's payload with the computing device 102. For instance, the token generation engine 114 on the computing device 102 can create a pseudonymous token identifier that is specific to the token. The token generation engine 114 can use the token's content, a random number, an identifier for the computing device 102, or other appropriate data to generate the pseudonymous token identifier.

The inclusion of the identifier in the entry in the off-device sensitive data 132 enables the computing device 102 to instruct the publisher system 124 to perform actions relating to data for particular applications, particular tokens, or the computing device 102, e.g., to improve privacy, data security, or both. For instance, when the computing device 102 presents a user interface, e.g., to a user of the computing device 102, about data accessed by the application 116, the computing device 102 can receive data that indicates a user request that the application 116, the publisher system 124, or both, delete the sensitive data that the respective application or system stored in memory. Although this example relates to deleting data, the user interface can include menu options for any other appropriate action for the data. Other appropriate actions can include presentation of at least some of the data or correction of at least some of the data.

When the computing device 102 receives a request to delete data stored on the publisher system 124, the computing device 102 can access the audit log 108. The computing device 102 can determine, using the audit log 108, the tokens that were sent to the publisher system 124. For instance, when the computing device 102 sends a token to the publisher system 124, the computing device 102 can create an audit entry in the audit log 108 that identifies the data requested, the application 116, the publisher system 124, and the token identifier. The audit entry can include an expiration date for the data sent to the publisher system 124.

The computing device 102 uses data, e.g., identifiers, for the application 116, the publisher system 124, or both, to determine the audit entries in the audit log 108 for the publisher system. For each of the determined entries, the computing device 102 determines the corresponding token identifiers. The computing device 102 can generate a request to delete data on the publisher system 124 that includes the token identifiers for the tokens sent to the publisher system 124. The computing device 102 can send the request to the publisher system 124. This allows control at the computing device 102 over the continued storage of off-device sensitive data 132 originating from the computing device 102, improving privacy, data security, or both.

The publisher system 124 receives the deletion request and processes the deletion request. For instance, the publisher system 124 determines that the request is a request to delete entries in the off-device sensitive data 132 and determines the token identifiers from the request. The publisher system uses the token identifiers to determine the entries in the off-device sensitive data 132 and deletes the determined entries. This enables the computing device 102 to control what data is stored on external systems while maintaining user privacy, e.g., when using pseudonymous identifiers.

When the publisher system 124 receives a token, at time T_{D}, the publisher system 124 can use the data type, identified in the token, to determine how to process the token. For example, when the publisher system 124 communicates with multiple different types of applications, receives multiple different types of data, or both, the publisher system 124 can determine how to process the data using the data type included in the token. For instance, the publisher system 124 can communicate with a heart monitoring application that provides heart rate data and a blood pressure application that provides blood pressure data. When the publisher system 124 receives data from an application, the publisher system can use the data type from the token to determine the data type. The publisher system 124 can use the data type to determine how to process data in the token. The publisher system 124 can perform a first process on heart rate data, e.g., to determine whether a heart rate is within an acceptable heart rate range, and a second process on blood pressure data, e.g., to determine whether a blood pressure is within an acceptable blood pressure range.

The publisher system 124 can use the expiration data from the token to determine when to delete the received data. For instance, when the expiration data indicates that the data can only be stored temporarily, the publisher system 124 does not store data from the token in long-term memory. The publisher system 124 can include, in the entries stored in the off-device sensitive data 132, the expiration data. The publisher system 124 can periodically analyze the expiration data in the off-device sensitive data 132 and delete entries that have expired.

In some implementations, an application 116 can be associated with multiple different twice-signed data usage tokens. Each of the twice-signed data usage tokens can have different categories of data types requested. Each of the twice-signed data usage tokens can have a different declared use. Each of the twice-signed data usage tokens has a different publisher signature, a different authorization system signature, or both. For instance, the application 116 can have a non-advertising twice-signed data usage token 118 and an advertising twice-signed data usage token 122.

When the application 116 requests data from the computing device 102, the application's 116 request identifies which twice-signed data usage token the validation engine 106 should use to validate the request. For instance, the request can include a particular twice-signed data usage token. The request can reference a memory location at which a particular twice-signed data usage token is stored.

The validation engine 106 can use the particular twice-signed data usage token to validate the application's 116 request. For instance, when the application 116 requests access to the heart rate data 110, the validation engine 106 would enable the application's 116 access to the heart rate data 110 based on the non-advertising twice-signed data usage token 118 but would prevent the application's 116 access to the heart rate data 110 based on the advertising twice-signed data usage token 122. This can improve user privacy, reduce a likelihood that sensitive data is used for specified purposes (e.g., advertising purposes), or both.

The publisher system 124 and the data-access authorization system 134 are examples of systems implemented as computer programs on one or more computers in one or more locations, in which the systems, components, and techniques described in this document are implemented. The computing device 102 may be a personal computer, mobile communication device, or another device that can send and receive data over a network 136. The network, such as a local area network (LAN), wide area network (WAN), the Internet, or a combination thereof, connects the computing device 102, the publisher system 124, and the data-access authorization system 134. The publisher system 124, the data-access authorization system 134, or both, are examples of systems that may use a single server computer or multiple server computers operating in conjunction with one another, including, for example, a set of remote computers deployed as a cloud computing service.

The computing device 102 can include several different functional components, including the validation engine 106, and the token generation engine 114. The publisher system 124 can include several different functional components, including the token decryption engine 130. The validation engine 106, the token generation engine 114, the token decryption engine 130, or a combination of these, can include one or more data processing apparatuses. For instance, each of the validation engine 106, the token generation engine 114, and the token decryption engine 130 can include one or more data processors and instructions that cause the one or more data processors to perform the operations discussed herein.

The various functional components of the computing device 102, the publisher system 124, or both, may be installed on one or more computers as separate functional components or as different modules of a same functional component. For example, the validation engine 106, the token generation engine 114, and the token decryption engine 130 can be implemented as computer programs installed on one or more computers in one or more locations that are coupled to each through a network. In cloud-based systems for example, these components can be implemented by individual computing nodes of a distributed computing system.

FIG. 2 is a swim lane diagram of a process 200 for restricting access to data. For example, various steps in the process 200 can be used by the computing device 102, e.g., the operating system 104, the application 116, or the publisher system 124 from the environment 100.

The publisher system or the data access authorization system provides a twice-signed token (202). For instance, after the publisher system receives the twice-signed data usage token from an access authorization system, the publisher system can provide the twice-signed data usage token when a corresponding application is installed on the computing device, as part of a token renewal process, or at another appropriate time. The publisher system can provide the twice-signed data usage token in response to a request for a token, e.g., from the application or from the computing device.

The application receives and caches the twice-signed token (204). For instance, the application receives the twice-signed data usage token from the publisher system. The application can cache the twice-signed data usage token in a memory of the computing device on which the application is executing. The application can cache the twice-signed data usage token in a location in memory associated with the application, e.g., that includes data for the application.

**In** some examples, the twice-signed data usage token stored on the computing device and associated with the application is renewed. The application or the computing device can perform a twice-signed data usage token renewal process. The renewal process can occur on a periodic basis, e.g., monthly, yearly, or according to another appropriate time.

**In** some implementations, the renewal process can occur at or near a time when the twice-signed data usage token expires. For instance, when the application determines that the publisher expiration date has passed, the authentication-system expiration date has passed, or both, the application can request a twice-signed data usage token from the publisher system.

The application sends a request for sensitive data (206). The application can send the request to the operating system or another component in the computing device. For instance, the application can send the request to a sensor, such as a heart rate sensor, included in the computing device.

The operating system receives the request for sensitive data (208). Any appropriate component or combination of components in the computing device can receive the request and perform one or more of steps 208 through 222, steps 226 and 232, or a combination of two or more of these.

The operating system determines a requesting application (210). For example, the operating system uses data for the request to determine an identifier for the application. The request can include the identifier, e.g., when the request includes the twice-signed data usage token. The request can reference the identifier, e.g., when the request includes a reference to a memory location at which the twice-signed data usage token is stored. The operating system can determine the identifier based on receiving the request from the application.

When the operating system receives a request for data for use by an off-device system, the operating system can determine the requesting off-device system, e.g., instead of or in addition to determining the requesting application. For instance, the operating system can use the twice-signed data usage token included in the request and that is for the off-device system to determine an identifier for the off-device system.

The operating system accesses a twice-signed token for the application (212). For instance, the operating system accesses the twice-signed data usage token that was included in the request or is otherwise identified in the request, e.g., and is stored in memory. The memory location can be specific to the application, part of a database of twice-signed data usage tokens, or both.

When the request does not reference a twice-signed data usage token, or references a twice-signed data usage token that is invalid, the operating system can use data privilege settings included in the computing device to determine whether to allow the application access to the requested data. For instance, the operating system can determine whether the request references a twice-signed data usage token, whether the token is valid, or both.

If the request does not reference a twice-signed data usage token, or the token is invalid, the operating system can retrieve data privilege settings for the computing device. The data privilege settings can include settings that indicate data types to which applications have access. The settings can be default settings, user specified settings, or both. The operating system applies the data privilege settings to the request to control the application's access to the requested data.

In some examples, if the request does not reference a twice-signed data usage token, or the token is invalid, the operating system can generate, and present, a user interface that requests user input specifying data privilege settings for the application. For instance, the operating system can determine that the data privilege settings on the computing device do not include any settings for the application, e.g., application specific settings as compared to default settings, and generate the user interface in response.

The operating system validates the request using the twice-signed token (214). For example, the operating system validates the request as described elsewhere in this document when the operating system has a twice-signed data usage token for the request.

The operating system can validate a subset of the requests received from the application. For instance, the operating system can validate requests for the same data type on a periodic basis, e.g., weekly, when the twice-signed data usage token for the application is renewed, or at another appropriate time. The operating system can validate requests based on an amount of data requested, e.g., a payload size. For example, the operating system can validate a first request for a particular type of data received from the application and all later requests for which the request is for at least a threshold amount of data.

For a validated request, the operating system can collect the requested data for the application. For instance, the operating system can retrieve the requested data from memory. When the request is for data not currently stored in memory, e.g., sensor data, the operating system can receive the data.

The operating system creates and encrypts an attestation token (216). For instance, the operating system can create a token when the required data is for an off-device system. The operating system creates a token that includes the requested data as a payload in the token. The operating system can encrypt the data, e.g., using a public key for the requesting off-device system.

The operating system records application access to sensitive data (218). When the access is for an off-device system, the operating system can record the off-device system access to the sensitive data. A record for an off-device system includes an identifier for the off-device system. A record for an off-device system might include an identifier for the application.

The operating system can record access to the sensitive data by sending a request, to an audit system, for creation of a database entry that includes information about the request. The entry can include any of the data from the twice-signed data usage token. The entry can include information about the computing device, the time at which the data was provided, or both. In some examples, the audit system can be a remote system. In some examples, the audit system can reside on the computing device, e.g., the computing device 102, or is part of the device's operating system.

The audit system creates a log entry (220). The log entry can be an entry in a database that includes information about the sensitive data, the application that requested the sensitive data, an off-device system that received the data, or a combination of two or more of these.

The operating system provides the sensitive data (222). For instance, the operating system enables the application to access the sensitive data.

The application receives sensitive data (224). When the sensitive data is included in an attestation token, the application can forward the token to an off-device system. The application can determine to which off-device system to forward the data using an identifier for the off-device system that is included in the token, based on a system with which the application provides services on the computing device, e.g., a navigation system, or using another appropriate method.

The operating system requests sensitive data usage (226). The operating system can receive data that indicates user input requesting presentation of a user interface that includes information about sensitive data usage. The operating system can send the request in response to receipt of the data that indicates the user input. The request can be for a specific application on the computing device, for all applications, or for a subset of applications.

The audit system retrieves log entries (228). For instance, the audit system receives the request and determines the log entries responsive to the request. The audit system retrieves the determined entries from a database.

The audit system provides log entries (230). For example, the audit system provides the retrieved log entries to the operating system or an application executing on the computing device that requested the sensitive data usage information.

The operating system presents the sensitive data usage user interface (232). The operating system can generate instructions for presenting the user interface and provide the instructions to an application or another component in the computing device. For instance, the operating system can provide the instructions to a graphics processing unit included in the computing device.

The sensitive data usage user interface can depict any appropriate information about which applications accessed which data. The sensitive data usage user interface can depict an application's declared data use. The sensitive data usage user interface can depict an identity of a publisher for an application. The sensitive data usage user interface can include a link to a publisher's privacy policy, e.g., based on the twice-signed data usage token. The privacy policy can be the current privacy policy, the privacy policy at the time the data was accessed, or both.

The sensitive data usage user interface can include options that enable customization of data privilege settings. For instance, the sensitive data usage user interface can include, for each application that accessed data, or sensitive data, an option to customize the data privilege settings for the application. The operating system can receive, while the sensitive data usage user interface is presented, user input that indicates a request for custom data access settings for the application. In response, the operating system can update data access settings for the application using the request for custom data access settings for the application.

The sensitive data usage user interface can include options that enable deletion, correction, or other access of sensitive data accessed by an application, a subset of applications, e.g., all mapping applications, or all applications. The examples here can apply to other types of data access in addition to data deletion. For instance, the sensitive data usage user interface can include, for each application that accessed data, or sensitive data, a menu option that, upon selection, causes the operating system to send a request to the application that instructs the application to delete all data received from the computing device. In implementations in which data is stored off-device, the menu option can cause the off-device system to delete data received from the computing device, e.g., using a device identifier or a token identifier.

In some implementations, the operating system can use a twice-signed data usage token for an application until the operating system receives data privilege settings for the application. For example, when an application is first installed on the computing device, e.g., as part of a factory installation process or after being sold to an end user, the computing device can receive a twice-signed data usage token for the application. While the computing device uses the twice-signed data usage token for the application, the computing device can include one or more default data privilege settings, e.g., for the application or for another application. The computing device does not use the default data privilege settings for the application because the computing device has a twice-signed data usage token for the application.

When the computing device receives data access requests from the application, the computing device can determine whether the computing device includes user specified data privilege settings for the application. Upon determining that the computing device does not include user specified data privilege settings for the application, the computing device, e.g., the operating system, can validate the application's data access using the twice-signed data usage token for the application.

If the computing device receives data that indicates user input of user specified data privilege settings for the application, e.g., after or during presentation of the sensitive data usage user interface, the computing device creates user specified data privilege settings for that application. When the application requests access to data after the creation of the user specified data privilege settings, the computing device applies the user specified data privilege settings instead of using the twice-signed data usage token.

The order of steps in the process 200 described above is illustrative only, and restricting access to data can be performed in different orders. For example, the operating system can record application access to sensitive data prior to validating the request using the twice-signed data usage token, e.g., to log all requests including denied requests. In some implementations, the operating system can record application access to sensitive data and then create and encrypt an attestation token.

In some implementations, the computing device can provide data about the data usage requests, e.g., anonymous data that only identifies application identifiers and types of data requested, to a data-access authorization system for later use. The data-access authorization system can use the received data when validating future twice-signed data usage tokens for the applications. The data-access authorization system can authorize access to more limited types of data for applications that more frequently request access to data outside of the declared type, categories of data types requested, or both, from the corresponding twice-signed data usage token. The data-access authorization system can authorize access to more types of data for applications that complied with the declared use, categories of data types requested, or both, included in the corresponding twice-signed data usage token.

In some implementations, the process 200 can include additional steps, fewer steps, or some of the steps can be divided into multiple steps. For example, the operating system can perform steps 208, 214, 218, and 222 without performing the other steps in the process 200. The operating system can perform steps 208 through 218 and step 222 without performing the other steps in the process 200. The operating system can perform steps 226, and 232 without performing the other steps in the process 200.

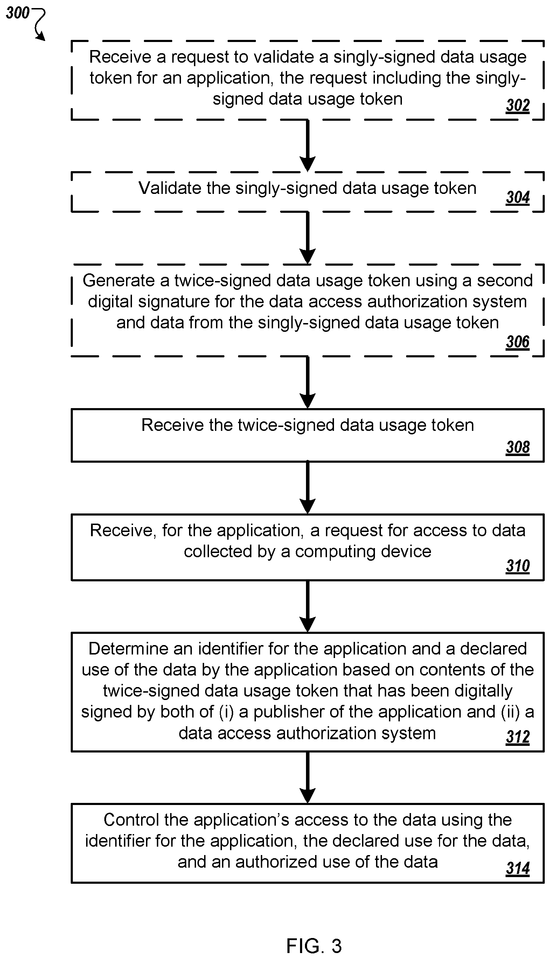

FIG. 3 is a flow diagram of a process 300 for controlling an application's access to data. For example, the process 300 can be used by the computing device 102 or the data-access authorization system 134 from the environment 100, or a combination of both.

A data-access authorization system receives a request to validate a singly-signed data usage token for an application, the request including the singly-signed data usage token (302). The singly-signed data usage token includes an identifier for an application that will request access to data from a computing device. The singly-signed data usage token includes a declared use of data received from the computing device and by the application or by a remote system, and a first digital signature for the publisher of the application or for the remote system.

The data-access authorization system can receive the request from a computer or system for the publisher. For instance, the publisher's system can generate a token that includes, e.g., as a payload, one or more requested data types, the declared use of data received from the computing device and by the application or the publisher's system, a link to a privacy policy for the publisher, an identifier for the publisher, a public key for the publisher, an identifier for the application, time data that represents when the twice-signed data usage token expires, or a combination of two or more of these. The publisher's system can generate the first digital signature for the data included in the token, e.g., the data included in the payload. The publisher's system can generate the first digital signature using a private key, e.g., that coincides with the public key, to authenticate that the data in the token is from the publisher's computer. The publisher's system can include the first digital signature in the token. The publisher's system can provide the token, that includes the first digital signature and other data, to the data-access authorization system.

The data-access authorization system validates the singly-signed data usage token (304). For instance, the data-access authorization system can validate the declared use, the first digital signature, or both. In some examples, the data-access authorization system can validate the time data, e.g., to ensure that the singly signed data usage token has not expired.

The data-access authorization system can validate the declared use by determining whether to allow the application to use the data received from a device for the declared use. If the data-access authorization system determines that the declared use matches a permitted use for the application, e.g., using a whitelist of application types and declared uses, the data-access authorization system can validate the declared use. For instance, the whitelist can indicate that health applications can be allowed access to heart rate information, navigation applications can be allowed access to location data, etc.

The data-access authorization system can validate the first digital signature by determining whether the first digital signature was actually generated by a system for the publisher. For instance, the data-access authorization system can determine that the singly-signed data usage token is authentic and was generated by the publisher's system using the first digital signature for the publisher of the application, the publisher's public key, the contents of the token, or a combination of two or more of these.

The data-access authorization system generates a twice-signed data usage token using a second digital signature for the data-access authorization system and data from the singly-signed data usage token (306). For instance, the data-access authorization system can append the second digital signature for the data-access authorization system to the singly-signed data usage token. The data-access authorization system can generate a new token that includes the second digital signature and data from the singly-signed data usage token, e.g., the payload and the first digital signature from the singly-signed data usage token. The data-access authorization system can add the second digital signature to the singly-signed data usage token to generate the twice-signed data usage token.

**In** some examples, the data-access authorization system can add an expiration date to the singly-singed data usage token to generate the twice-signed data usage token. The expiration date can indicate a date when data accessed using the twice-signed data usage token expires. For instance, when the application or other system that accessed the data collected by the computing device determines that a current date matches the expiration date, the application or other system deletes the data that was collected by the computing device and received by the application or other system, e.g., if that data was not previously deleted. In some implementations, the publisher system includes the expiration date in the singly-signed data usage token.

A computing device receives the twice-signed data usage token (308). For example, when the computing device includes a database of twice-signed data usage tokens, the computing device can receive the twice-signed data usage token from the data-access authorization system. The computing device can store the twice-signed data usage token in memory, e.g., in a database or in a memory of data for a corresponding application.

**In** some implementations, the computing device receives the twice-signed data usage token from a data-access authorization system. The computing device can receive the twice-signed data usage token from the data-access authorization system after the computing device installs a corresponding application, after the data-access authorization system generates the twice-signed data usage token, or both.

**In** some examples, the data-access authorization system provides the twice-signed data usage token to a computer system for the publisher. The publisher's computer system can associate the twice-signed data usage token with the application. For instance, the publisher's computer system can include a database of entries that include a twice-signed data usage token and an associated application identifier. The publisher's computer system can add the received twice-signed data usage token to the database along with the corresponding application's identifier.

When the application is installed on the computing device, the publisher's computer system can retrieve the twice-signed data usage token from the database and provide the twice-signed data usage token to the computing device. In some examples, the application can maintain the twice-signed data usage token on the computing device. The computing device can maintain the twice-signed data usage token, e.g., in a token database.

The computing device receives, for the application, a request for access to data collected by the computing device (310). The request can identify the application, reference the twice-signed data usage token, or both. For example, when the request includes the twice-signed data usage token, the token includes an identifier for the application. In some implementations, the computing device determines that the identifier from the token matches the identity of the calling application.

The computing device determines an identifier for the application and a declared use of the data by the application based on contents of the twice-signed data usage token that has been digitally signed by both of (i) a system that has data for the application, e.g., a publisher of the application or remote system who receives sensitive data from the application, and (ii) a data-access authorization system (312). For instance, when the computing device receives the twice-signed data usage token in the request, the computing device can retrieve the identifier and the declared use of the data from the request.

When the computing device does not receive the twice-signed data usage token, the computing device can determine identifying information for the application from which the computing device received the request. The computing device can determine the application using data in the request that identifies the application, whether the identifier for the application or other data such as a process identifier for an executing application that is device specific.

The computing device can use the identifying information to retrieve the twice-signed data usage token. For example, the computing device can access a database using the identifying information to retrieve the twice-signed data usage token from the database. In some examples, the computing device can request the twice-signed data usage token from another system, e.g., the publisher's computer system, using the identifying information.

The computing device controls the application's access to the data using the identifier for the application, the declared use for the data, and an authorized use of the data (314). For instance, the computing device authorizes the application to access the data, provides the data to the application, or otherwise controls the application's access to the data.

The controlling can include enabling, by the computing device and for the application, access to the data when (i) either signature of the twice-signed data usage token has been validated and (ii) the declared use of the data matches an authorized use of the data. The controlling can include preventing the application from accessing the data when (i) both signatures of the twice-signed data usage token have not been validated or (ii) the declared use of the data fails to match the authorized use of the data, or (iii) the requested data doesn't match the authorized data category, or (iii) either signature of the twice-signed data usage token has expired.

The computing device can enable access by providing data to the application. The computing device can enable access by sending a message to a corresponding component, e.g., sensor or software application or both, indicating that the component should provide the requested data to the application. The computing device can enable access by updating permissions settings, e.g., at the operating system level, to indicate that the application has access to the data.

The computing device can prevent access by determining to skip providing the data to the application. The computing device can prevent access by providing the application with a message that indicates that the application will not be given the requested data. The computing device can prevent access by updating permissions settings, e.g., at the operating system level, to indicate that the application does not have access to the data. In some examples, after the computing device prevents access, the application can explicitly ask for permission via a data access setting user interface of the computing device. The application can cause presentation of the user interface, e.g., to a user, which includes a user interface option to grant the application access to the data.

The order of steps in the process 300 described above is illustrative only, and controlling an application's access to data can be performed in different orders. For example, the device can receive the twice-signed data usage token as part of the request. The device can receive the twice-signed data usage token after receiving the request.

In some implementations, the process 300 can include additional steps, fewer steps, or some of the steps can be divided into multiple steps. For example, the process 300 can include only steps 308 through 314 or only steps 310 through 314.

In some implementations, the computing device can use a requested data type when controlling an application's access to data. For instance, the computing device can determine one or more requested data types identified by the twice-signed data usage token. The computing device can then enable, for the application, access to the data when (i) both signatures of the twice-signed data usage token have been validated, (ii) the declared use of the data matches an authorized use of the data, and (iii) the one or more requested data types include the data type of the data requested. The computing device can prevent the application from accessing the data when (i) either signature of the twice-signed data usage token has not been validated or (ii) the declared use of the data fails to match the authorized use of the data or (iii) the one or more requested data types do not include the data type of the data requested.

The declared use of the data by the application can be from a predetermined set of data usages. For instance, the predetermined set of data usages can include a first use, a second use, and a third use. A publisher system can select one of the first use, the second use, or the third use as the declared use. In some examples, the publisher system can select multiple uses from the predetermined set of data usages. One of the data usages can be an option for any data use, e.g., that would indicate that the publisher system declares that the requested data could be used for any purpose.

The requested data types for the application can be from a predetermined set of data types. For instance, the predetermined set of data types can include a first data type, a second data type, and a third data type. The requested data types can include one or more data types from the predetermined set of data types. In some examples, the requested data types can include all data types from the predetermined set of data types.

In some implementations, the computing device can use data access settings for an application instead of the twice-signed data usage token to control the application's access to data. For instance, when the data access settings indicate that they are to be used instead of a twice-signed data usage token for the application, the computing device can use the data access settings irrespective of whether the request included a token. For instance, the computing device can receive, for a second application that is a different application from the application, a second request for access to second data collected by the device. The computing device can determine that the device includes data access settings for the second application. In response to determining that the device includes data access settings for the second application, the computing device can determine to skip analysis of any twice-signed data usage token for the second application. The computing device can control the second application's access to the second data using the data access settings, e.g., as discussed above with reference to the first application.

In some examples, the computing device can determine that the device does not have a twice-signed data usage token for the second application. In response to determining that the device does not have a twice-signed data usage token for the second application, the computing device can determine default data access settings for the second application. The computing device can control the second application's access to the second data using the default data access settings.

For situations in which the systems discussed here collect personal information about users, or may make use of personal information, the users may be provided with an opportunity to control whether programs or features collect personal information (e.g., information about a user's social network, social actions or activities, profession, a user's preferences, or a user's current location), or to control whether and/or how to receive content from the content server that may be more relevant to the user. In addition, certain data may be anonymized in one or more ways before it is stored or used, so that personally identifiable information is removed. For example, a user's identity may be anonymized so that no personally identifiable information can be determined for the user, or a user's geographic location may be generalized where location information is obtained (such as to a city, ZIP code, or state level), so that a particular location of a user cannot be determined. Thus, the user may have control over how information is collected about him or her and used by a content server.

A number of implementations have been described. Nevertheless, it will be understood that various modifications may be made without departing from the scope of the disclosure. For example, various forms of the flows shown above may be used, with steps re-ordered, added, or removed.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that generates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a smart phone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., LCD (liquid crystal display), OLED (organic light emitting diode) or other monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HyperText Markup Language (HTML) page, to a user device, e.g., for purposes of displaying data to and receiving user input from a user interacting with the user device, which acts as a client. Data generated at the user device, e.g., a result of the user interaction, can be received from the user device at the server.

While this specification contains many specific implementation details, these should not be construed as limitations on the scope of what may be claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures (such as spreadsheets, relational databases, or structured files) may be used.

Particular embodiments of the invention have been described. Other embodiments are within the scope of the following claims. For example, the steps recited in the claims, described in the specification, or depicted in the figures can be performed in a different order and still achieve desirable results. In some cases, multitasking and parallel processing may be advantageous.

## Claims

1. A computer-implemented method comprising:
receiving, by a device (102) and for an application (116), a request for access to data collected by the device (102);
determining, by the device (102) and based on a twice-signed data usage token for the application (116), an identifier for the application (116) and a declared use of the data by the application (116) based on contents of the twice-signed data usage token that has been digitally signed by both of (i) a system (124) that has data for the application (116) and (ii) a data-access authorization system (134); and
controlling, by the device (102), the application's access to the data using the identifier for the application (116), the declared use for the data, and an authorized use of the data, including:
enabling, by the device (102) and for the application (116), access to the data when (i) both signatures of the twice-signed data usage token have been validated and (ii) the declared use of the data matches an authorized use of the data; and
preventing the application (116) from accessing the data when (i) either signature of the twice-signed data usage token has not been validated or (ii) the declared use of the data fails to match the authorized use of the data.

2. The method of claim 1 or 2, wherein controlling, by the device (102), application (116) access to the data comprises controlling, by an operating system (104) of the device (102), application (116) access to the data.

3. The method of any preceding claim, wherein receiving the request comprises receiving a request that identifies the twice-signed data usage token.

4. The method of any preceding claim, comprising:
in response to receiving the request, determining an identifier for the application (116); and
retrieving, by the device (102) and from a token database (128), the twice-signed data usage token using the identifier for the application (116).

5. The method of any preceding claim, wherein:
controlling application (116) access to the data comprises controlling, by the device (102), application (116) access to the data using the identifier for the application (116), the declared use for the data, the one or more requested data types, and a data type of the data requested, including:
enabling, by the device (102) and for the application (116), access to the data when (i) both signatures of the twice-signed data usage token have been validated, (ii) the declared use of the data matches an authorized use of the data, and (iii) neither signature has expired; and
preventing the application (116) from accessing the data when (i) either signature of the twice-signed data usage token has not been validated or (ii) the declared use of the data fails to match the authorized use of the data or (iii) either signature has expired.

6. The method of any preceding claim, comprising:
determining one or more requested data types identified by the twice-signed data usage token, wherein:
controlling application (116) access to the data comprises controlling, by the device (102), application (116) access to the data using the identifier for the application (116), the declared use for the data, the one or more requested data types, and a data type of the data requested, including:
enabling, by the device (102) and for the application (116), access to the data when (i) both signatures of the twice-signed data usage token have been validated, (ii) the declared use of the data matches an authorized use of the data, and (iii) the one or more requested data types include the data type of the data requested; and
preventing the application (116) from accessing the data when (i) either signature of the twice-signed data usage token has not been validated or (ii) the declared use of the data fails to match the authorized use of the data or (iii) the one or more requested data types do not include the data type of the data requested.

7. The method of claim 6, wherein:
the declared use of the data by the application (116) is from a predetermined set of declared data uses; and
the one or more requested data types are from a predetermined set of data types.

8. The method of any preceding claim, wherein the twice-signed data usage token comprises one or more of a link to a privacy policy for a publisher of the application (116), an identifier for the publisher, a public key for the publisher, or time data that represents when the twice-signed data usage token expires.

9. The method of claim 8, wherein the time data comprises (a) a signature date that indicates when the publisher signed the twice-signed data usage token after which the twice-signed data usage token will expire upon the end of a predetermined period of time or (b) an expiration date that indicates when the twice-signed data usage token expires.

10. The method of claim 8, wherein the public key for the publisher indicates the declared use of the data by the application (116), the system (124) that has data for the application (116), or both.

11. The method of any preceding claim, wherein a first signature for the system (124) that has data for the application (116) verifies the contents of a first part of the twice-signed data usage token and a second signature for the data-access authorization system (134) verifies the contents of the entire twice-signed data usage token.

12. The method of claim 11, wherein the first signature for the system (124) that has data for the application (116) verifies the identifier for the application (116) and the declared use of the data by the application (116).

13. The method of any preceding claim, comprising:
receiving, by the device (102) and for a second application that is a different application from the application (116), a second request for access to second data collected by the device (102);
determining, by the device (102), that the device (102) includes data access settings for the second application;
in response to determining that the device (102) includes data access settings for the second application, determining, by the device (102), to skip analysis of any twice-signed data usage token for the second application; and
controlling, by the device (102), the second application's access to the second data using the data access settings.

14. A computer storage medium encoded with instructions that, when executed by one or more computers, cause the one or more computers to perform the method of any preceding claim.

15. A system comprising one or more computers and one or more storage devices on which are stored instructions that are operable, when executed by the one or more computers, to cause the one or more computers to perform the method of any of claims 1 to 13.

## Patentansprüche

1. Computerimplementiertes Verfahren, umfassend:
Empfangen, durch eine Vorrichtung (102) und für eine Anwendung (116), einer Anforderung nach Zugriff auf durch die Vorrichtung (102) gesammelte Daten;
Bestimmen, durch die Vorrichtung (102) und basierend auf einem doppelt signierten Datennutzungstoken für die Anwendung (116), einer Kennung für die Anwendung (116) und einer erklärten Verwendung der Daten durch die Anwendung (116) basierend auf dem Inhalt des doppelt signierten Datennutzungstokens, das sowohl durch (i) ein System (124), das Daten für die Anwendung (116) aufweist, als auch durch (ii) ein Datenzugriffautorisierungssystem (134) digital signiert wurde; und
Kontrollieren des Zugriffs der Anwendung auf die Daten durch die Vorrichtung (102) unter Verwendung der Kennung für die Anwendung (116), der erklärten Verwendung für die Daten und einer autorisierten Verwendung der Daten, beinhaltend:
Ermöglichen des Zugriffs auf die Daten durch die Vorrichtung (102) und für die Anwendung (116), wenn (i) beide Signaturen des doppelt signierten Datennutzungstokens validiert wurden und (ii) die erklärte Verwendung der Daten mit einer autorisierten Verwendung der Daten übereinstimmt; und
Verhindern des Zugriffs der Anwendung (116) auf die Daten, wenn (i) eine der Signaturen des doppelt signierten Datennutzungstokens nicht validiert wurde oder (ii) die erklärte Verwendung der Daten nicht mit der autorisierten Verwendung der Daten übereinstimmt.

2. Verfahren nach Anspruch 1 oder 2, wobei das Kontrollieren des Zugriffs der Anwendung (116) auf die Daten durch die Vorrichtung (102) Kontrollieren des Zugriffs der Anwendung (116) auf die Daten durch ein Betriebssystem (104) der Vorrichtung (102) umfasst.

3. Verfahren nach einem der vorhergehenden Ansprüche, wobei das Empfangen der Anforderung Empfangen einer Anforderung umfasst, die den doppelt signierten Datennutzungstoken identifiziert.

4. Verfahren nach einem der vorhergehenden Ansprüche, umfassend:
Bestimmen einer Kennung für die Anwendung (116) als Reaktion auf das Empfangen der Anforderung; und
Abrufen des doppelt signierten Datennutzungstokens unter Verwendung der Kennung für die Anwendung (116) durch die Vorrichtung (102) und aus einer Tokendatenbank (128).

5. Verfahren nach einem der vorhergehenden Ansprüche, wobei:
das Kontrollieren des Zugriffs der Anwendung (116) auf die Daten Kontrollieren des Zugriffs der Anwendung (116) auf die Daten durch die Vorrichtung (102) unter Verwendung der Kennung für die Anwendung (116), der erklärten Verwendung für die Daten, des einen oder der mehreren angeforderten Datentypen und eines Datentyps der angeforderten Daten umfasst, beinhaltend:
Ermöglichen des Zugriffs auf die Daten durch die Vorrichtung (102) und für die Anwendung (116), wenn (i) beide Signaturen des doppelt signierten Datennutzungstokens validiert wurden, (ii) die erklärte Verwendung der Daten mit einer autorisierten Verwendung der Daten übereinstimmt und (iii) keine der Signaturen abgelaufen ist; und
Verhindern des Zugriffs der Anwendung (116) auf die Daten, wenn (i) eine der Signaturen des doppelt signierten Datennutzungstokens nicht validiert wurde oder (ii) die erklärte Verwendung der Daten nicht mit der autorisierten Verwendung der Daten übereinstimmt oder (iii) eine der Signaturen abgelaufen ist.

6. Verfahren nach einem der vorhergehenden Ansprüche, umfassend:
Bestimmen eines oder mehrerer angeforderten Datentypen, die durch das doppelt signierte Datennutzungstoken identifiziert werden, wobei:
das Kontrollieren des Zugriffs der Anwendung (116) auf die Daten Kontrollieren des Zugriffs der Anwendung (116) auf die Daten durch die Vorrichtung (102) unter Verwendung der Kennung für die Anwendung (116), der erklärten Verwendung für die Daten, des einen oder der mehreren angeforderten Datentypen und eines Datentyps der angeforderten Daten umfasst, beinhaltend:
Ermöglichen des Zugriffs auf die Daten durch die Vorrichtung (102) und für die Anwendung (116), wenn (i) beide Signaturen des doppelt signierten Datennutzungstokens validiert wurden, (ii) die erklärte Verwendung der Daten mit einer autorisierten Verwendung der Daten übereinstimmt und (iii) der eine oder die mehreren angeforderten Datentypen den Datentyp der angeforderten Daten beinhalten; und
Verhindern des Zugriffs der Anwendung (116) auf die Daten, wenn (i) eine der Signaturen des doppelt signierten Datennutzungstokens nicht validiert wurde oder (ii) die erklärte Verwendung der Daten nicht mit der autorisierten Verwendung der Daten übereinstimmt oder (iii) der eine oder die mehreren angeforderten Datentypen den Datentyp der angeforderten Daten nicht beinhalten.

7. Verfahren nach Anspruch 6, wobei:
die erklärte Verwendung der Daten durch die Anwendung (116) aus einem vorbestimmten Satz von erklärten Datenverwendungen stammt; und
der eine oder die mehreren angeforderten Datentypen aus einem vorbestimmten Satz von Datentypen stammen.

8. Verfahren nach einem der vorhergehenden Ansprüche, wobei das doppelt signierte Datennutzungstoken einen oder mehrere Links zu einer Datenschutzrichtlinie für einen Herausgeber der Anwendung (116), eine Kennung für den Herausgeber, einen öffentlichen Schlüssel für den Herausgeber oder Zeitdaten umfasst, die darstellen, wann das doppelt signierte Datennutzungstoken abläuft.

9. Verfahren nach Anspruch 8, wobei die Zeitdaten (a) ein Signaturdatum, das angibt, wann der Herausgeber das doppelt signierte Datennutzungstoken signiert hat, wonach das doppelt signierte Datennutzungstoken am Ende eines vorbestimmten Zeitraums abläuft, oder (b) ein Ablaufdatum, das angibt, wann das doppelt signierte Datennutzungstoken abläuft, umfassen.

10. Verfahren nach Anspruch 8, wobei der öffentliche Schlüssel für den Herausgeber die erklärte Verwendung der Daten durch die Anwendung (116), das System (124), das Daten für die Anwendung (116) aufweist, oder beides angibt.

11. Verfahren nach einem der vorhergehenden Ansprüche, wobei eine erste Signatur für das System (124), das Daten für die Anwendung (116) aufweist, den Inhalt eines ersten Teils des doppelt signierten Datennutzungstokens verifiziert und eine zweite Signatur für das Datenzugriffautorisierungssystem (134) den Inhalt des gesamten doppelt signierten Datennutzungstokens verifiziert.

12. Verfahren nach Anspruch 11, wobei die erste Signatur für das System (124), das Daten für die Anwendung (116) aufweist, die Kennung für die Anwendung (116) und die erklärte Verwendung der Daten durch die Anwendung (116) verifiziert.

13. Verfahren nach einem der vorhergehenden Ansprüche, umfassend:
Empfangen, durch die Vorrichtung (102) und für eine zweite Anwendung, die eine andere Anwendung als die Anwendung (116) ist, einer zweiten Anforderung nach Zugriff auf durch die Vorrichtung (102) gesammelte zweite Daten;
Bestimmen, dass die Vorrichtung (102) Datenzugriffseinstellungen für die zweite Anwendung beinhaltet, durch die Vorrichtung (102);
als Reaktion auf das Bestimmen, dass die Vorrichtung (102) Datenzugriffseinstellungen für die zweite Anwendung beinhaltet, Bestimmen, eine Analyse eines beliebigen doppelt signierten Datennutzungstokens für die zweite Anwendung zu überspringen, durch die Vorrichtung (102); und
Kontrollieren des Zugriffs der zweiten Anwendung auf die zweiten Daten durch die Vorrichtung (102) unter Verwendung der Datenzugriffseinstellungen.

14. Computerspeichermedium, das mit Anweisungen codiert ist, die bei Ausführung durch einen oder mehrere Computer den einen oder die mehreren Computer veranlassen, das Verfahren nach einem der vorhergehenden Ansprüche durchzuführen.

15. System, umfassend einen oder mehrere Computer und eine oder mehrere Speichervorrichtungen, auf denen Anweisungen gespeichert sind, die bei Ausführung durch den einen oder die mehreren Computer den einen oder die mehreren Computer veranlassen, das Verfahren nach einem der Ansprüche 1 bis 13 durchzuführen.

## Revendications

1. Procédé mis en œuvre par ordinateur comprenant :
la réception, par un dispositif (102) et pour une application (116), d'une demande d'accès à des données collectées par le dispositif (102) ;
la détermination, par le dispositif (102) et sur la base d'un jeton d'utilisation de données signé deux fois pour l'application (116), d'un identifiant pour l'application (116) et d'une utilisation déclarée des données par l'application (116) sur la base de contenus du jeton d'utilisation de données signé deux fois qui a été signé numériquement par (i) un système (124) qui présente des données pour l'application (116) et (ii) un système d'autorisation d'accès aux données (134) ; et
la commande, par le dispositif (102), de l'accès à l'application aux données à l'aide de l'identifiant de l'application (116), l'utilisation déclarée des données et une utilisation autorisée des données, comportant :
l'activation, par le dispositif (102) et pour l'application (116), de l'accès aux données lorsque (i) les deux signatures du jeton d'utilisation de données signé deux fois ont été validées et (ii) l'utilisation déclarée des données correspond à une utilisation autorisée des données ; et
le fait d'empêcher l'application (116) d'accéder aux données lorsque (i) une des deux signatures du jeton d'utilisation de données signé deux fois n'a pas été validée et (ii) l'utilisation déclarée des données ne correspond pas à une utilisation autorisée des données.

2. Procédé selon la revendication 1 ou 2, dans lequel la commande, par le dispositif (102), de l'accès de l'application (116) aux données comprend la commande, par un système d'exploitation (104) du dispositif (102), de l'accès de l'application (116) aux données.

3. Procédé selon une quelconque revendication précédente, dans lequel la réception de la demande comprend la réception d'une demande qui identifie le jeton d'utilisation de données signé deux fois.

4. Procédé selon une quelconque revendication précédente, comprenant :
en réponse à la réception de la demande, la détermination d'un identifiant pour l'application (116) ; et
la récupération, par le dispositif (102) et à partir d'une base de données de jetons (128), du jeton d'utilisation de données signé deux fois à l'aide de l'identifiant de l'application (116).

5. Procédé selon une quelconque revendication précédente, dans lequel :
la commande de l'accès de l'application (116) aux données comprend la commande, par le dispositif (102), de l'accès de l'application (116) aux données à l'aide de l'identifiant de l'application (116), de l'utilisation déclarée des données, de l'un ou des plusieurs types de données demandés et d'un type de données des données demandées, comportant :
l'activation, par le dispositif (102) et pour l'application (116), de l'accès aux données lorsque (i) les deux signatures du jeton d'utilisation de données signé deux fois ont été validées, (ii) l'utilisation déclarée des données correspond à une utilisation autorisée des données, et (iii) aucune des deux signatures n'a expiré ; et
le fait d'empêcher l'application (116) d'accéder aux données lorsque (i) une des deux signatures du jeton d'utilisation de données signé deux fois n'a pas été validée ou (ii) l'utilisation déclarée des données ne correspond pas à l'utilisation autorisée des données ou (iii) une des deux signatures a expiré.

6. Procédé selon une quelconque revendication précédente, comprenant :
la détermination d'un ou de plusieurs types de données demandés identifiés par le jeton d'utilisation de données signé deux fois, dans lequel :
la commande de l'accès de l'application (116) aux données comprend la commande, par le dispositif (102), de l'accès de l'application (116) aux données à l'aide de l'identifiant de l'application (116), de l'utilisation déclarée des données, de l'un ou des plusieurs types de données demandés et d'un type de données des données demandées, comportant :
l'activation, par le dispositif (102) et pour l'application (116), de l'accès aux données lorsque (i) les deux signatures du jeton d'utilisation de données signé deux fois ont été validées, (ii) l'utilisation déclarée des données correspond à une utilisation autorisée des données, et (iii) l'un ou les plusieurs types de données demandés comportent le type de données des données demandées ; et
le fait d'empêcher l'application (116) d'accéder aux données lorsque (i) une des deux signatures du jeton d'utilisation de données signé deux fois n'a pas été validée ou (ii) l'utilisation déclarée des données ne correspond pas à l'utilisation autorisée des données ou (iii) l'un ou les plusieurs types de données demandés ne comportent pas le type de données des données demandées.

7. Procédé selon la revendication 6, dans lequel :
l'utilisation déclarée des données par l'application (116) provient d'un ensemble prédéterminé d'utilisations de données déclarées ; et
l'un ou les plusieurs types de données demandés proviennent d'un ensemble prédéterminé de types de données.

8. Procédé selon une quelconque revendication précédente, dans lequel le jeton d'utilisation de données signé deux fois comprend un ou plusieurs éléments parmi un lien vers une politique de confidentialité pour un éditeur de l'application (116), un identifiant pour l'éditeur, une clé publique pour l'éditeur, ou des données temporelles qui représentent le moment où le jeton d'utilisation de données signé deux fois expire.

9. Procédé selon la revendication 8, dans lequel les données temporelles comprennent (a) une date de signature qui indique quand l'éditeur a signé le jeton d'utilisation de données signé deux fois, après quoi le jeton d'utilisation de données signé deux fois expirera à la fin d'une période prédéterminée ou (b) une date d'expiration qui indique quand le jeton d'utilisation de données signé deux fois expire.

10. Procédé selon la revendication 8, dans lequel la clé publique pour l'éditeur indique l'utilisation déclarée des données par l'application (116), le système (124) qui présente des données pour l'application (116), ou les deux.

11. Procédé selon une quelconque revendication précédente, dans lequel une première signature pour le système (124) qui possède des données pour l'application (116) vérifie les contenus d'une première partie du jeton d'utilisation de données signé deux fois et une seconde signature pour le système d'autorisation d'accès aux données (134) vérifie les contenus de l'ensemble du jeton d'utilisation de données signé deux fois.

12. Procédé selon la revendication 11, dans lequel la première signature pour le système (124) qui présente des données pour l'application (116) vérifie l'identifiant de l'application (116) et l'utilisation déclarée des données par l'application (116).

13. Procédé selon une quelconque revendication précédente, comprenant :
la réception, par le dispositif (102) et pour une seconde application différente de l'application (116), d'une seconde demande d'accès à des secondes données collectées par le dispositif (102) ;
la détermination, par le dispositif (102), selon laquelle le dispositif (102) comporte des paramètres d'accès aux données pour la seconde application ;
en réponse à la détermination selon laquelle le dispositif (102) comporte des paramètres d'accès aux données pour la seconde application, la détermination, par le dispositif (102), d'ignorer l'analyse d'un quelconque jeton d'utilisation de données signé deux fois pour la seconde application ; et
la commande, par le dispositif (102), de l'accès de la seconde application aux secondes données à l'aide des paramètres d'accès aux données.

14. Support de stockage informatique codé avec des instructions qui, lorsqu'elles sont exécutées par un ou plusieurs ordinateurs, amènent l'un ou les plusieurs ordinateurs à réaliser le procédé selon une quelconque revendication précédente.

15. Système comprenant un ou plusieurs ordinateurs et un ou plusieurs dispositifs de stockage stockant des instructions exploitables qui, lorsqu'elles sont exécutées par l'un ou les plusieurs ordinateurs, amènent l'un ou les plusieurs ordinateurs à réaliser le procédé selon l'une quelconque des revendications 1 à 13.
